# EUROPEAN PATENT SPECIFICATION

(11) **EP 2 186 463 B1**
(45) Date of publication and mention of the grant of the patent: **25.01.2012**
(21) Application number: 08019722.1
(22) Date of filing: 12.11.2008
(51) Int. Cl.: A47L 9/28, A47L 15/42, D06F 39/00

(54) **Household appliance with demonstration mode function**
Haushaltsgerät mit Vorführmodusfunktion
Appareil domestique avec fonction de mode de démonstration

(43) Date of publication of application: 19.05.2010
(73) Proprietor: Electrolux Home Products Corporation N.V., 1130 Brussels (BE)
(72) Inventor: Alberghetti, Paolo, 31020 San Vendemiano (IT); Cohen, Ilan, S-10545 Stockholm (SE); Toscano, Osvaldo Antonio, 33010 Tavagnacco (UD) (IT)
(74) Representative: Markovina, Paolo

(56) References cited:
- WO-A-97/22172
- DE-A1- 19 746 423
- KR-A- 20040 069 636
- KR-A- 20040 095 777
- US-A1- 2008 109 243

## Description

The present invention refers to an electrical appliance with a demonstration mode function.

Nowadays the household appliances, particularly the refrigerators, are usually exposed in the shops placing a great number of them aligned side by side on the shop floor.

The differences in the external appearance of the various household appliances of a same kind (for example of the refrigerators) are often small, while the technical characteristics and the operational functions of different appliances of the same kind may be very different.

There is therefore the need to give to the possible customer a way to appreciate, directly in the shop (or in other exposition places, such as a trade fair), the operational functions of the household appliance, so as to help him to choose the appliance which best meets his requirements.

In order to satisfy this need, there have been developed some household appliances adapted to operate in a demonstration mode, called also "demo mode", that is a functional mode which allows the user to interact with the user interface (usually comprising a display and an input device, such as a keyboard or one or more buttons or knobs) of the household appliance, as if the latter would really work. The demo mode could also comprise the representation via the user interface of some information regarding the household appliance, for instance the power consumption, a description of the operational functions, some instructions, etc. In this way the user can learn and also practise on the various functions of the household appliance, even if the latter doesn't really operate.

For example in the demo mode a user could practice on setting and activating the washing programs of a washing machine, a rapid cooling function in a refrigerator, a particular cooking program in an oven, etc.

This solution has however the drawback that to operate in the demo mode the household appliance must be connected to the power net, called also supply mains or mains voltage, which is not always available in the exposition place in which the appliance is exposed; furthermore, even if the supply mains would be present in the exposition place, the power consumption due to the power supply of many household appliances could be very high.

An example of household appliance provided with a demo mode function is illustrated, for instance, in KR20040095777, which discloses a control device of an oven display unit and a method thereof, which are provided to operate the display unit of an oven according to place or time, by selecting the normal operation mode and the demo mode, with a demo mode setting switch before supplying power; the control device and the method are also apt to improve the safety and the reliability by an automatically stopping function of the oven in the demo mode. The control device of the oven display unit comprises a demo mode setting switch for selecting the demo mode by a user.

US 5,801,637 discloses a shaving apparatus powered by a rechargeable battery. The shaving apparatus comprises a display with signs for indicating a status of operational functions of the apparatus, such as the residual charge of the battery and the residual number of usage periods.

The shaving apparatus further comprise a control system for activating the signs in dependence on a condition of use of the apparatus during a cycle of use which corresponds to recharging and to discharging of the rechargeable battery. The control system includes a demonstration mode for demonstrating on the display a cycle of use of the apparatus, by displaying in an accelerated manner the signs in the sequence of their appearance during the cycle of use.

If the shaving apparatus is connected to the mains voltage, a microcontroller, comprised in the shaving apparatus, detects the connection to the mains voltage and can choose from a single demonstration or a recurrent demonstration.

This solution has however some drawbacks; in fact it requires the usage of a rechargeable battery adapted for powering not only the demo mode, but also the electric motor of the shaving apparatus; a rechargeable battery of this kind is rather expensive, and therefore it increases the costs of the shaving apparatus.

Moreover the shaving apparatus must be provided of a recharging circuit for the rechargeable battery, which is rather complex, and therefore increases again the costs of the shaving apparatus.

In addition, if the rechargeable battery is not charged enough, and the mains voltage is also not available to feed the appliance or to recharge the battery (as it could sometimes happen in a shop), there isn't the possibility to perform the demo mode, which nullify the advantages of having an appliance provided with a demo mode function.

The use, in a refrigerator, of a battery to operate a monitor as an alternative to the supply mains, is disclosed, for instance, in KR20040069636, which illustrates a refrigerator comprising a body on which it is formed a separating groove to secure a separating space for a monitor device. The monitor is internally provided with a battery and a control unit to enable the monitor to be operated when it is detached from the refrigerator. Electrical connectors are provided in the groove and on the monitor to supply power to the monitor when it is mounted on the refrigerator. The monitor is also provided with a locking means to attach/detach the monitor to and from the refrigerator.

This solution isn't however provided of a demonstration mode, and therefore doesn't allow a user practicing on the various functions of the refrigerator without really actuate these functions.

The use, in a household appliance, of a battery to power supply a display, as an alternative to the supply mains, is also disclosed in US 7,126,569, which illustrates a display device comprising a liquid crystal display which uses liquid crystals with a memory effect. The display device is attachable to and detachable from a household electrical appliance. When the display device is attached to a household appliance, it is supplied with the electric power from the electrical appliance. The display may be driven by a secondary battery which is charged with electricity supplied from an electric power source of the household electrical appliance to which the display device is attached.

Also this solution has however some drawbacks; the secondary battery is in fact a rechargeable battery, which is typically rather expensive, and therefore requires a specific recharging circuit, which increases the complexity and the costs of the appliance.

Moreover, also in this case if the battery is flat and the supply mains are not available, the display can't be powered.

In addition this solution isn't provided with a demonstration mode, and therefore it doesn't allow a user trying the operational functions of the household appliance without really activate these functions.

The aim of the present invention is therefore to obtain an household appliance provided with a demonstration mode function which allows performing this demo mode function even if the supply mains is not available, and without substantially increasing the costs of the appliance.

Whithin this aim, another object of the present invention is to allow the performance of the demo mode function only when this function is needed, so as to avoid, for instance, an ill-timed authomatic activation of the demo mode function during the real functioning of the household appliance.

It is therefore an object of the present invention to solve the above-noted problems, thereby doing away with the drawbacks of the cited prior art.

The Applicant has found that by the usage of a main power supply circuit connectable to the supply mains, of a secondary power supply circuit connectable to a battery, and of a logic unit configured to detect if the main power supply circuit is connected to the supply mains and if the secondary power supply circuit is connected to the battery, and also to enable the performing, via a user interface, of a demonstration mode if the main circuit is unconnected to the supply mains and the secondary power supply circuit is connected to the battery, it is possible to perform the demonstration mode also without the availability of the supply mains, and without increasing the costs of the appliance.

In particular, the above-mentioned aim and objects, as well as others that will become better apparent hereinafter, are achieved by a household appliance comprising:
- an user interface,
- a logic unit adapted to control the user interface and the other electrical components of the household appliance, and to perform, via the user interface, a demonstration mode,
- a main power supply circuit connectable to the supply mains and adapted to energize the user interface, the logic unit and the other electrical components of the household appliance,
- a secondary power supply circuit connectable to a battery and adapted to energize exclusively the user interface and the logic unit.

The logic unit is configured to detect if the main power supply circuit is connected to the supply mains and if the secondary power supply circuit is connected to the battery, and to enable the performing of the demonstration mode, via the user interface, when it detects that the main circuit is unconnected to the supply mains and the secondary power supply circuit is connected to the battery.

Opportunely the logic unit is configured to disconnect the battery from the secondary power supply circuit when it detects that the main circuit is connected to the supply mains and the secondary power supply circuit is connected to the battery.

Advantageously, the logic unit is configured to enable the performing of the demonstration mode or of a real mode when it detects that the main power supply circuit is connected to the supply mains.

In a further embodiment, the logic unit is configured in such a way that when it detects that the main power supply circuit is connected to the supply mains, it automatically enables the performance of a real mode.

Opportunely the logic unit is configured in such a way that it makes the demonstration mode to automatically start, substantially as soon as the logic unit detects that the main power supply circuit is unconnected to the supply mains and that the secondary power supply circuit is connected to the battery.

In a further embodiment, the logic unit is configured in such a way that, after enabling the performance of the demonstration mode, the start of this latter requires a further action on the user interface or on a further input device adapted to activate the demonstration mode.

Preferably the logic unit is configured in such a way that if it detects that the main power supply circuit is connected to the supply mains, it allows to selectively activate the demonstration mode after the activation of the real mode.

Opportunely the logic unit is configured in such a way that if it detects that the main power supply circuit is connected to the supply mains, it allows to selectively activate the real mode after the activation of the demonstration mode.

Advantageously the logic unit is configured in such a way that if it detects that the main power supply circuit isn't connected to the supply mains, and the secondary power supply circuit is connected to the battery, it prevents the activation of the real mode.

In a preferred embodiment, the household appliance comprises a switch, actuated by the logic unit, adapted to disconnect the battery from the secondary power supply circuit when the logic unit detects that the main circuit is connected to the supply mains and the secondary power supply circuit is connected to the battery.

Preferably the battery is removably connectable to the household appliance.

Opportunely the battery is connectable to the secondary power supply circuit by inserting it in a suitable housing obtained in the external casing of the household appliance.

In a further embodiment, the battery is of the rechargeable type and the household appliance comprises a battery charger adapted, when the main power supply circuit is connected to the supply mains, to recharge the battery; the logic unit is in this case adapted to detect the level of charge of the battery, and also to actuate the battery charger, so as to recharge the battery if the level of charge is lower than a fixed level.

Features and advantages of the present invention will anyway be more readily understood from the description that is given below by way of nonlimiting example with reference to the accompanying drawings, in which:
- **Figure 1** is a schematic view of some components of a household appliance according to the invention, in a condition in which the supply mains and the battery are not connected;
- **Figure 2** is a schematic view of the household appliance of Figure 1 in a condition in which the supply mains are not connected, and a battery is connected to the secondary power supply circuit;
- **Figure 3** is a schematic view of the household appliance of Figure 1 in a condition in which the supply mains are connected and a battery is also present;
- **Figure 4** is a flowchart schematically illustrating the functioning of the logic unit of the household appliance illustrated in the previous Figures;
- **Figure 5** is a flowchart schematically illustrating another possible functioning of the logic unit of the household appliance illustrated in the previous Figures;
- **Figure 6** is a schematic view of a further embodiment of an household appliance according to the invention, in a condition in which the supply mains are connected and a battery is also present;
- **Figure 7** is a flowchart schematically illustrating the functioning of the logic unit of the household appliance illustrated in Figure 6.

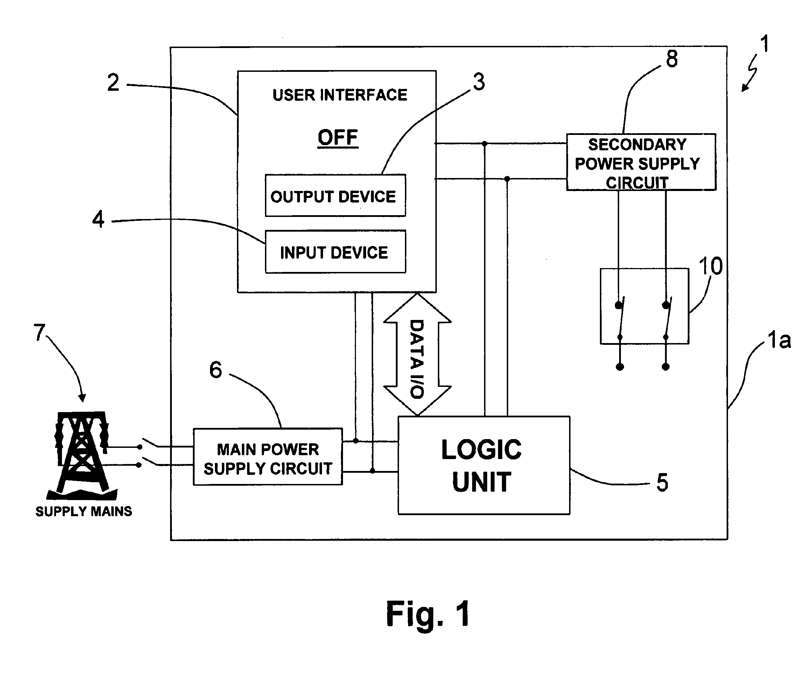

Figure 1 schematically illustrates a household appliance 1 which could be, for instance a refrigerator, an oven, a dishwasher, a laundry machine, a drying machine, a vacuum cleaner, etc.

The household appliance 1 comprises an external casing, schematically represented in the enclosed Figures by the block numbered 1a, containing various mechanical and electrical devices, not illustrated, adapted to perform the functions for which the household appliance 1 is designed. In the enclosed Figures and in the following description the above mentioned mechanical and electrical devices comprised in the external casing 1a of the household appliance 1 (for example, in the case of a refrigerator, the access door, the refrigeration circuit, the shelves or trays for the product to preserve, etc.) have not been illustrated nor described, since they are well known in the art.

The household appliance 1 according to the invention comprises a user interface 2, advantageously provided with an output device 3 and an input device 4.

The user interface 2 is preferably housed in a suitable seat, not illustrated, obtained in the household appliance 1, for example, in the external casing 1a of the latter; if the external casing 1a of the household appliance 1 is provided with an access door, not illustrated, such as in the case of a refrigerator, the seat adapted for housing the user interface 2 could be obtained also in the access door.

In a further embodiment, the user interface 2 could be positioned also internally to the household appliance, so as to be accessible only when the access door is opened.

Advantageously, the output device 3 could comprise a display and/or one or more LEDs, not illustrated, and/or one or more sound emitting devices, also not illustrated, such as a loudspeaker adapted to play some sounds, for example music, words, etc.

The display may be for example a LCD display, or a so called "e-paper" display, which is provided of a high contrast and visibility, which consumes a minimum current, and which, in some embodiment, could also maintain a static image even without power supply; the use of a "e-paper display" reduces the power consumption of the user interface 2, and therefore of the household appliance 1.

Opportunely the input device 4 could comprise a keyboard, and/or one or more buttons or knobs; in a further embodiment the display could be a touch screen display, so as to include both the functions of display and of input device.

The household appliance 1 according to the invention comprises a logic unit 5 configured to control the user interface 2 and the other electrical components, not illustrated, of the household appliance 1; these electrical components could comprise, for example, an electric motor, a compressor, a pump, an electric heater, a loudspeaker, etc.

Advantageously, the logic unit could 5 comprise a general purpose programmable microcontroller, for example the microcontroller sold by Freescale Semiconductor Inc. with the code MC68HC908QC16.

The logic unit 5 is also configured to perform, via the user interface 2, a demonstration mode; the demonstration mode could comprise, for instance, the visualisation on the display of images and/or writings, the emission of sounds from a loudspeaker, the possibility for the user to select, by the input device 4, some information to display on the display 3 or some actions or functions of the household appliance 1 to simulate, etc.

While the household appliance 1 is performing the demonstration mode, the user has therefore the possibility to actively interact with the household appliance 1, so as, for instance, to obtain information about the functioning of the latter, and/or to practice on the functions which can be performed.

It is clear that in the demonstration mode all the functions of the household appliance 1 (e.g. the washing cycle in a washing machine, a slow cooling function in a refrigerator, a particular cooking sequence in an oven, etc.) are only simulated, while the household appliance 1 isn't really operating.

For example, if the household appliance 1 is a refrigerator, after activating the demonstration mode a user can operate on the input device 4 in the same way as if he would really activate the various functioning of the refrigerator (e.g. a rapid cooling function, a silent mode function, etc); the refrigerator doesn't really activate these functions, but the logic unit 5 commands the output device 3 of the user interface 2 in such a way as to perform the same actions (e.g. to display the same images and/or to generate the same sounds or noises) as if the refrigerator would really operate.

The household appliance 1 comprises a main power supply circuit 6 connectable to the supply mains 7, and adapted to energize the user interface 2, the logic unit 5 and the other electrical components, not illustrated, of the household appliance 1.

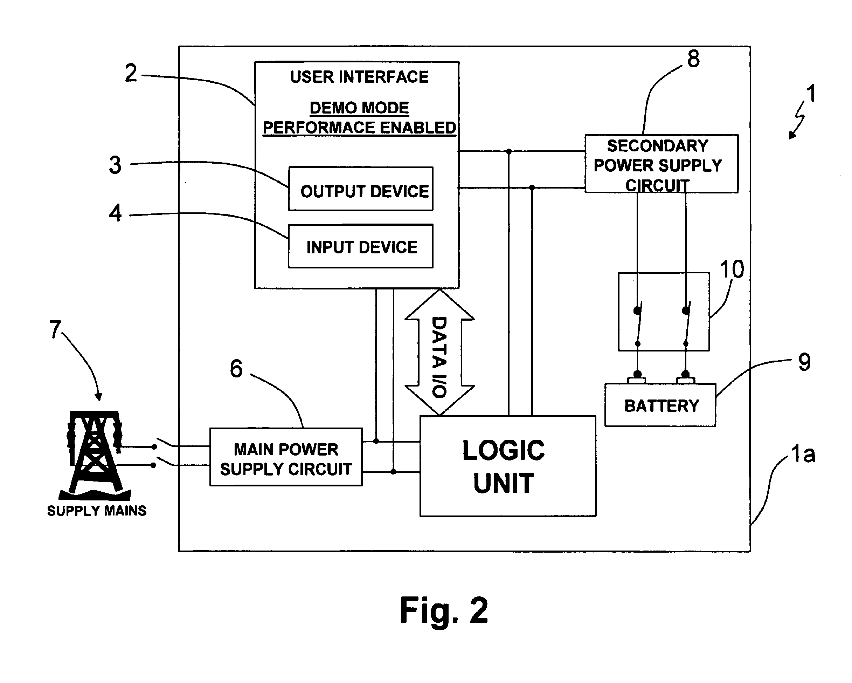

The household appliance 1 comprises a secondary power supply circuit 8 connectable to a battery 9, as shown in Figure 2, and adapted to energize exclusively the user interface 2 and the logic unit 5.

Advantageously the secondary power supply circuit 8 could be electrically separated from the main power supply circuit 6.

In a different embodiment, the secondary power supply circuit 8 and the main power supply circuit 6 could be electrically connected one another, for instance in correspondence to a same feeding connection of the user interface 2 to which both of them could be connected; in this second embodiment the household appliance 1 comprises one or more separating devices, for example a couple of diodes, not illustrated, disposed between the secondary power supply circuit 8 and the main power supply circuit 6 in such a way to avoid that an electric current would flow from the main power supply circuit 6 to the secondary power supply circuit 8, or vice-versa.

Advantageously the battery 9 is electrically connected to the secondary power supply circuit 8 when it is inserted in a suitable housing, not illustrated, obtained preferably in the external casing 1a of the household appliance 1. This electrical connection, as described later on, can be kept or interrupted depending on the working conditions.

Figures 1 and 2 show the situations where no battery is inserted in the housing and where the battery 9 is inserted in the housing, respectively.

Opportunely the battery 9 could be positioned in such housing after it has been placed in the exposition place, or directly in the place of production of the household appliance 1.

Advantageously the battery 9 could be removable, in such a way that it is possible to replace it when it is flat.

The logic unit 5 is also configured to detect if the main power supply circuit 6 is connected to the supply mains 7, and if the secondary power supply circuit 8 is connected to the battery 9, and to enable the performing of the above mentioned demonstration mode, via the user interface 2, when it detects that the main power supply circuit 6 is unconnected to the supply mains 7 and that the secondary power supply circuit 8 is connected to the battery 9.

Advantageously the logic unit 5 is arranged in such a way that it settles that the main supply circuit 6 is connected to the supply mains 7 when it detects the presence of an electric voltage in the main supply circuit 6. Advantageously the logic unit 5 is arranged in such a way that it settles that the battery 9 is connected to the secondary power supply circuit 8 when it detects the presence of an electric voltage in the secondary power supply circuit 8.

In the embodiment in which the main power supply circuit 6 and the secondary power supply circuit 8 are electrically connected one another, for example in correspondence to the feeding connection of the user interface 2, the presence of the separating devices, not illustrated, avoids that the logic unit 5 would detect the presence of an electic voltage in one of the power supply circuits if it is not feeded while the other is feeded.

For the purposes of the present invention, the expression "enabling the performance of the demonstration mode" means to take the household appliance 1 in a condition in which the demonstration mode could be performed; in a first embodiment of the present invention, the logic unit 5 can be configured in such a way that the demonstration mode automatically starts as soon as this condition is achieved.

Alternatively the logic unit 5 can be configured in such a way that, after enabling the performance of the demonstration mode, this latter doesn't start immediately, but it may be afterward activated by a user, by acting on the user interface 2 or on a further suitable input device, not illustrated, adapted to manually activate the demo mode (e.g. a button, a knob, a remote controller, etc).

As better explained hereinafter, the logic unit 5 could be also configured to disconnect the battery 9 from the secondary power supply circuit 8, when it detects that the main power supply circuit 6 is connected to the supply mains 7 and that the secondary power supply circuit 8 is connected to the battery 9.

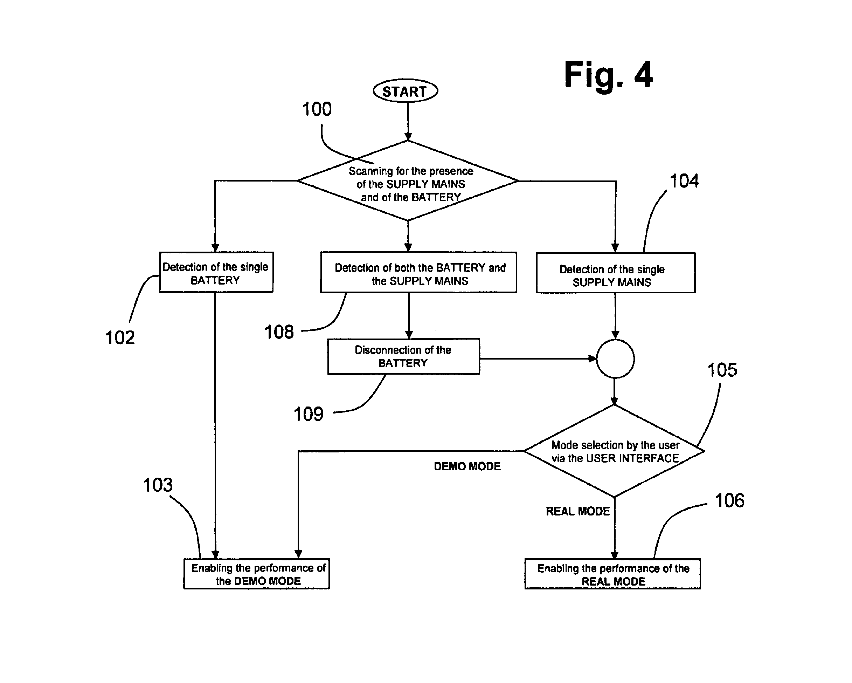

A possible functioning of the logic unit 5 is schematically illustrated in the flowchart of Figure 4.

Obviously, when the main power supply circuit 6 isn't connected to the supply mains 7 and the secondary power supply circuit 8 isn't connected to the battery 9, the household appliance 1, and therefore the logic unit 5, is not powered, and no operation is therefore possible. This condition (not represented in the flow chart) occurs, for example, during the transport of the household appliance 1 from the place of production to the exposition place (e.g. a shop or a trade fair).

Differently, when the household appliance 1 is in the exposition place, and either the main power supply circuit 6 is connected to the supply mains 7 and/or a battery 9 is inserted in the dedicated housing and connected the secondary power supply circuit 8, the logic unit 5 is power supplied.

When the logic unit 5 is powered, it, continuously or periodically, checks (block 100) the presence of the connections of the main power supply circuit 6 with the supply mains 7 and of the secondary power supply circuit 8 with the battery 9.

If the main power supply circuit 6 isn't connected to the supply mains 7, the logic unit 5 detects only the presence of the battery 9 (block 102), and enables the performing of a demonstration mode via the user interface 2 (block 103).

As mentioned above, the logic unit 5 could be configured in such a way that it automatically activates the demonstration mode as soon as it detects that its power supply is provided only by a battery 9; alternatively the logic unit 5 could be configured in such a way that, after enabling the performance of the demonstration mode, this latter doesn't start immediately, but it may be afterward activated by a user by acting on the user interface 2 or on a further suitable input device, not illustrated, adapted to manually activate the demo mode.

The logic unit 5 can be advantageously configured in such a way that when the power supply is provided only by the battery 9, the real mode, that is the mode in which the household appliance 1 really operates, can't be activated.

If the main power supply circuit 6 is connected to the supply mains 7 and the battery 9 isn't connected to the secondary power supply circuit 8, the logic unit 5 detects only the presence of the supply mains 7 (block 104), and enables the user to select (block 105), via the user interface 2, if enabling the performance of a demonstration mode or of a real mode (i.e. the real functioning of the household appliance 1).

For the purposes of the present invention, the expression "enabling the performing of the real mode" means to take the household appliance 1 in a condition in which the real mode could be performed.

By the user interface 2 the user can therefore select to enable the real mode (block 106); from this moment the user, by acting on the user interface 2, can activate one or more of the real functions of the household appliances 1.

Alternatively the user can select to enable the demonstration mode (block 103); also in this case the logic unit 5 could be configured in such a way that it automatically activates the demonstration mode, or in such a way that the demonstration mode could be afterwards activated by the user.

Advantageously the logic unit 5 can be configured in such a way that, when it detects that the supply mains 7 are connected to the main power supply circuit 6, preferably by the user interface 2, or also by a further activation device, the user can selectively activate the demonstration mode or the real mode even after the activation respectively of the real mode or of the demonstration mode.

If the main power supply circuit 6 is connected to the supply mains 7, and also the battery 9 is connected to the secondary power supply circuit 8, the logic unit 5 detects the presence of connections with both the battery 9 and the supply mains 7 (block 108).

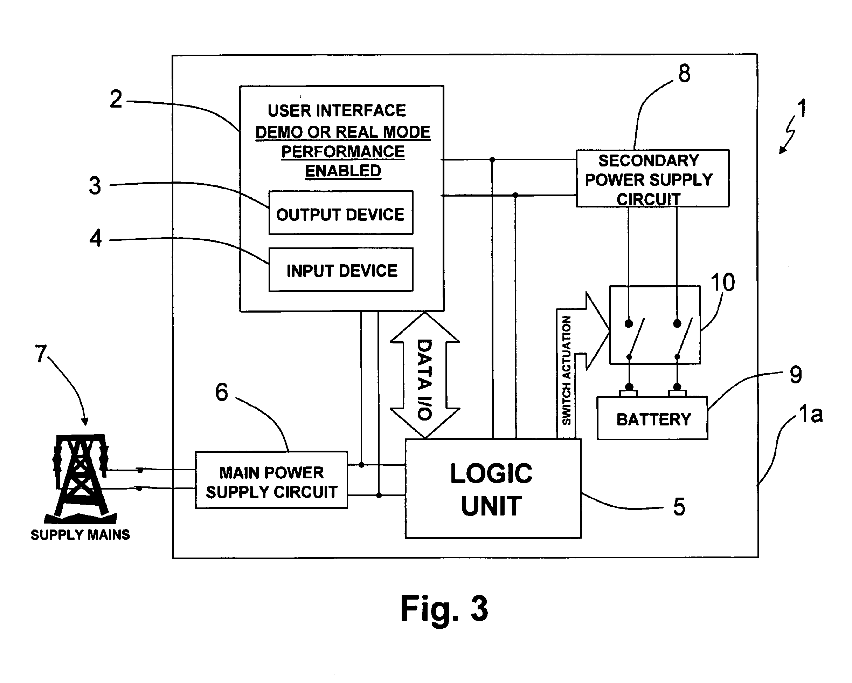

In this case the logic unit 5 could be preferably configured in such a way that it causes the disconnection of the battery 9 from the secondary power supply circuit 8 (block 109), as shown in Figure 3; the disconnection of the battery 9 from the secondary power supply circuit 8 could be obtained, for example, by a suitable switch 10 (which could be an electromechanical or also an electronic switch), actuated by the logic unit 5 and interposed between the secondary power supply circuit 8 and the battery 9.

In a further embodiment, not illustrated, the disconnection of the battery 9 when the main power supply circuit 6 is connected to the supply mains 7, could be obtained, for example, by a relay, not illustrated, interposed between the battery 9 and the secondary supply circuit 8, and connected to the main supply circuit 6 in such a way that it interrupts the contact between the battery 9 and the secondary supply circuit 8 when it detects the presence of a voltage on the main supply circuit 6.

The disconnection of the battery 9 when the main supply circuit 6 is connected to the supply mains 7 could be however obtained by another suitable electrical separation device (e.g. a switch, e relay, a suitable arranged diode), controlled or not by the logic unit 5.

After the disconnection of the battery 9, the power supply is provided to the user interface 2 only by the supply mains 7, and the process continues in the same way as when only the supply mains 7 is detected by the logic unit 5, that is allowing the user to select (block 105) if enabling the real mode (block 106) or the demonstration mode (103).

The disconnection of the battery 9 when also the main power supply circuit 6 is connected with the supply mains 7 ensures that, when the household appliance 1 is functioning in the real mode, if for example a malfunctioning or a fault occurs to the supply mains 7 resulting in an interruption of the power supply to the logic unit 5, the latter doesn't automatically enable the performance of the demonstration mode; in fact in this case, if the battery 9 would be still connected to the secondary power supply circuit 8, the logic unit 5 would detect it, and therefore would automatically enable the performance of the demonstration mode in a situation in which this mode may be not opportune (e.g. if the household appliance has been already installed).

In another possible embodiment, not illustrated, according to the invention, the battery 9 could however remain connected to the secondary power supply circuit 8 when the main power supply circuit 6 is connected to the supply mains 7.

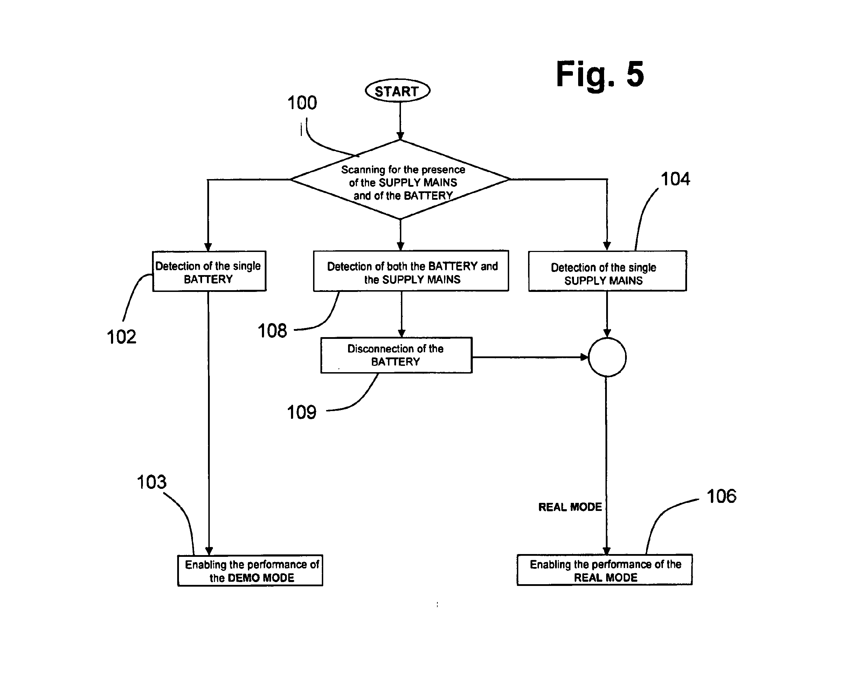

In a different embodiment, illustrated in Figure 5, the logic unit 5 is configured in such a way that, after the detection of the presence of the connection with the supply means 7 (block 104 or 108), and the possible disconnection of the battery 9 (block 109), it automatically enables the performance of the real mode (block 106), without allowing the user to select if enabling the demo mode or the real mode. Also in this case the logic unit 5 can be configured in such a way that, preferably by the user interface 2, the user can selectively activate the demonstration mode even after the activation of the real mode.

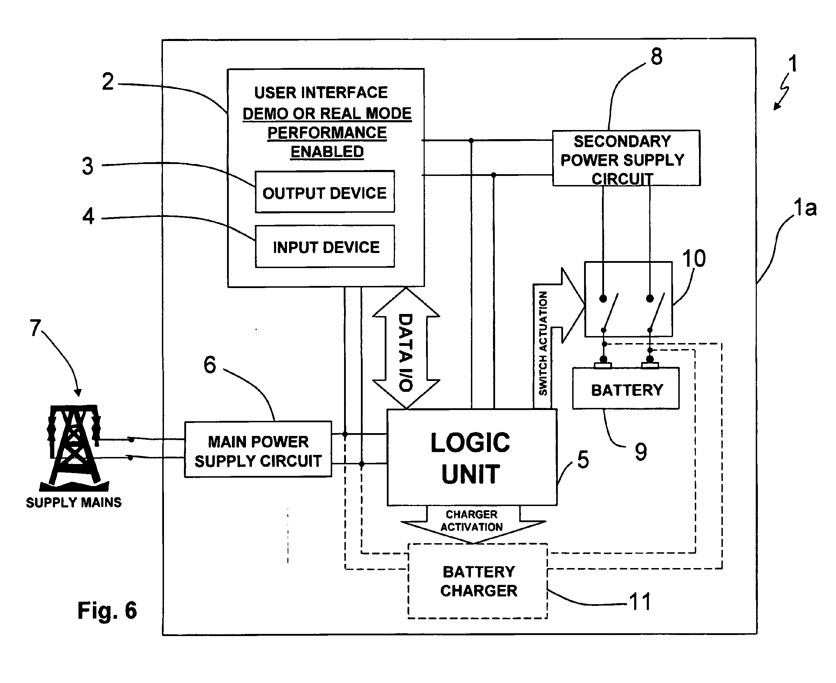

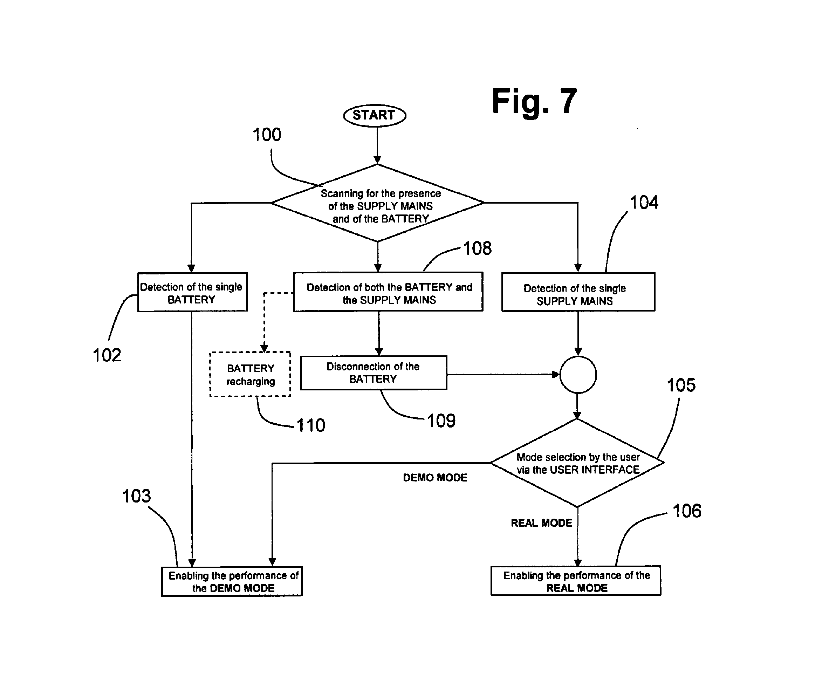

A further embodiment, illustrated in Figure 6 and 7, provides the possibility to use a battery 9 of the rechargeable type and that the household appliance 1 comprises a battery charger 11, adapted, when the main power supply circuit 6 is connected to the supply mains 7, to recharge the battery 9.

In this case the logic unit 5 is also adapted to detect the level of charge of the rechargeable battery 9, and also to actuate the battery charger 11, so as to recharge the battery 9, if the level of charge is lower than a fixed level.

In this embodiment, a possible functioning of the logic unit 5 is schematically illustrated by the flowchart of Figure 7, which differs from the flowchart illustrated in Figure 4 only because the logic unit 5, after detecting (block 108) the presence of connections with both the battery 9 and the supply mains 7, activates the recharging of the battery 9 (block 110).

The rechargeable battery could anyway be removed and replaced also by a non rechargeable battery; in this way, even if the rechargeable battery 9 is flat and the supply mains 7 are not available to power supply the household appliance and/or to recharge the battery, it is possible to enable the demonstration mode simply replacing the rechargeable battery with a charged (rechargeable or non-rechargeable) one.

It is seen therefore how the invention achieves the proposed aim and objects, there being provided a household appliance which, by the use of a battery associable to the appliance also after its positioning in the exposition place (e.g. a shop floor), allows performing a demonstration mode even without a connection to the supply mains.

Moreover, the possibility to use a simple battery to power the demonstration mode allows performing the demonstration mode substantially in every place and situation; if the battery is flat, being it a rechargeable battery or a non-rechargeable one, it is in fact possible to enable the demonstration mode simply replacing the rechargeable battery with a charged one.

Furthermore the disconnection of the battery when the logic unit detects that also a supply mains is connected, avoids an ill-timed automatic activation of the demonstration mode in case of malfunctioning of fault of the supply mains.

The structure of the household appliance according to the invention is also quite simple, and therefore its costs are limited.

## Claims

1. Household appliance (1) comprising:
- a user interface (2),
- a logic unit (5) adapted to control said user interface (2) and the other electrical components of the household appliance, and to perform, via said user interface (2), a demonstration mode,
- a main power supply circuit (6) connectable to the supply mains (7) and adapted to energize said user interface (2), said logic unit (5) and said other electrical components of the household appliance (1),
- a secondary power supply circuit (8), connectable to a battery (9) and adapted to energize exclusively said user interface (2) and said logic unit (5),
**characterised in that**
said logic unit (5) is configured to detect if said main power supply circuit (6) is connected to said supply mains (7) and if said secondary power supply circuit (8) is connected to said battery (9), and to enable the performing of said demonstration mode via said user interface (2), when it detects that said main power supply circuit (6) is unconnected to said supply mains (7) and said secondary power supply circuit (8) is connected to said battery (9).

2. Household appliance (1), according to claim 1, **characterised in that** said logic unit (5) is configured to disconnect said battery (9) from said secondary power supply circuit (8) when it detects that said main power supply circuit (6) is connected to said supply mains (7) and said secondary power supply circuit (8) is connected to said battery (9).

3. Household appliance (1), according to claim 1 or 2, **characterised in that** said logic unit (5) is configured to enable the performing of said demonstration mode or of a real mode when it detects that said main power supply circuit (6) is connected to said supply mains (7).

4. Household appliance (1), according to claim 1 or 2, **characterised in that** said logic unit (5) is configured in such a way that when it detects that said main power supply circuit (6) is connected to said supply mains (7), it automatically enables the performance of a real mode.

5. Household appliance (1), according to one or more of the previous claims, **characterised in that** said logic unit (5) is configured in such a way that it makes said demonstration mode to automatically start when it detects that said main power supply circuit (6) is unconnected to said supply mains (7) and that said secondary power supply circuit (8) is connected to said battery (9).

6. Household appliance (1), according to one or more of claims 1 to 4, **characterised in that** said logic unit (5) is configured in such a way that, after enabling the performance of said demonstration mode, the start of this latter requires a further action on said user interface (2) or on a further input device adapted to activate said demonstration mode.

7. Household appliance (1), according to one or more of the previous claims, **characterised in that** said logic unit (5) is configured in such a way that if it detects that said main power supply circuit (6) is connected to said supply mains (7), it allows to selectively activate the demonstration mode after the activation of the real mode.

8. Household appliance (1), according to one or more of the previous claims, **characterised in that** said logic unit (5) is configured in such a way that if it detects that said main power supply circuit (6) is connected to said supply mains (7), it allows to selectively activate the real mode after the activation of the demonstration mode.

9. Household appliance (1), according to one or more of the previous claims, **characterised in that** said logic unit (5) is configured in such a way that if it detects that said main power supply circuit (6) isn't connected to said supply mains (7), and said secondary power supply circuit (8) is connected to said battery (9), it prevents the activation of the real mode.

10. Household appliance (1), according to one or more of the previous claims, **characterised in that** it comprises a switch (10)' controlled by said logic unit (5), adapted to selectively connect or disconnect said battery (9) from said secondary power supply circuit 2.

11. Household appliance (1), according to one or more of the previous claims, **characterised in that** said battery (9) is removably connectable to said household appliance (1).

12. Household appliance (1), according to one or more of the previous claims, **characterised in that** said battery (9) is connectable to said secondary power supply circuit (8) by inserting it in a suitable housing obtained in the external casing (1a) of said household appliance (1).

13. Household appliance (1), according to one or more of the previous claims, **characterised in that** said battery (9) is of the rechargeable type and that said household appliance (1) comprises a battery charger (11) adapted, when said main power supply circuit (6) is connected to said supply mains (7), to recharge said battery (9), said logic unit (5) being adapted to detect the level of charge of said battery (9), and also to actuate said battery charger (11), so as to recharge said battery (9), if the level of charge is lower than a fixed level.

## Patentansprüche

1. Haushaltsgerät (1), umfassend:
- eine Benutzerschnittstelle (2),
- eine Logikeinheit (5), die geeignet ist, die Benutzerschnittstelle (2) und die anderen elektrischen Bauteile des Haushaltsgeräts zu steuern und über die Benutzerschnittstelle (2) einen Demonstrationsmodus auszuführen,
- einen Hauptstromversorgungskreis (6), der mit dem Versorgungsnetz (7) verbunden werden kann und geeignet ist, die Benutzerschnittstelle (2), die Logikeinheit (5) und die anderen elektrischen Bauteile des Haushaltsgeräts (1) mit Energie zu versorgen,
- einen sekundären Stromversorgungskreis (8), der mit einer Batterie (9) verbunden werden kann und geeignet ist, ausschließlich die Benutzerschnittstelle (2) und die Logikeinheit (5) mit Energie zu versorgen,
**dadurch gekennzeichnet, dass**
die Logikeinheit (5) derart konfiguriert ist, dass sie erkennt, ob der Hauptstromversorgungskreis (6) mit dem Versorgungsnetz (7) verbunden ist und ob der sekundäre Stromversorgungskreis (8) mit der Batterie (9) verbunden ist, und dass sie die Ausführung des Demonstrationsmodus über die Benutzerschnittstelle (2) ermöglicht, wenn sie feststellt, dass der Hauptstromversorgungskreis (6) nicht mit dem Versorgungsnetz (7) verbunden ist und der sekundäre Stromversorgungskreis (8) mit der Batterie (9) verbunden ist.

2. Haushaltsgerät (1) nach Anspruch 1, **dadurch gekennzeichnet, dass** die Logikeinheit (5) derart konfiguriert ist, dass sie die Batterie (9) vom sekundären Stromversorgungskreis (8) trennt, wenn sie feststellt, dass der Hauptstromversorgungskreis (6) mit dem Versorgungsnetz (7) verbunden ist und der sekundäre Stromversorgungskreis (8) mit der Batterie (9) verbunden ist.

3. Haushaltsgerät (1) nach Anspruch 1 oder 2, **dadurch gekennzeichnet, dass** die Logikeinheit (5) derart konfiguriert ist, dass sie die Ausführung des Demonstrationsmodus oder eines realen Modus ermöglicht, wenn sie feststellt, dass der Hauptstromversorgungskreis (6) mit dem Versorgungsnetz (7) verbunden ist.

4. Haushaltsgerät (1) nach Anspruch 1 oder 2, **dadurch gekennzeichnet, dass** die Logikeinheit (5) derart konfiguriert ist, dass sie automatisch die Ausführung eines realen Modus ermöglicht, wenn sie feststellt, dass der Hauptstromversorgungskreis (6) mit dem Versorgungsnetz (7) verbunden ist.

5. Haushaltsgerät (1) nach einem oder mehreren der vorhergehenden Ansprüche, **dadurch gekennzeichnet, dass** die Logikeinheit (5) derart konfiguriert ist, dass sie einen automatischen Start des Demonstrationsmodus veranlasst, wenn sie feststellt, dass der Hauptstromversorgungskreis (6) nicht mit dem Versorgungsnetz (7) verbunden ist und dass der sekundäre Stromversorgungskreis (8) mit der Batterie (9) verbunden ist.

6. Haushaltsgerät (1) nach einem oder mehreren der Ansprüche 1 bis 4, **dadurch gekennzeichnet, dass** die Logikeinheit (5) derart konfiguriert ist, dass, nachdem sie die Ausführung des Demonstrationsmodus ermöglicht hat, der Start des Letztgenannten eine weitere Betätigung der Benutzerschnittstelle (2) oder einer zusätzlichen Eingabevorrichtung erfordert, um den Demonstrationsmodus zu aktivieren.

7. Haushaltsgerät (1) nach einem oder mehreren der vorhergehenden Ansprüche, **dadurch gekennzeichnet, dass** die Logikeinheit (5) derart konfiguriert ist, dass sie, wenn sie feststellt, dass der Hauptstromversorgungskreis (6) mit dem Versorgungsnetz (7) verbunden ist, es erlaubt, nach der Aktivierung des realen Modus selektiv den Demonstrationsmodus zu aktivieren.

8. Haushaltsgerät (1) nach einem oder mehreren der vorhergehenden Ansprüche, **dadurch gekennzeichnet, dass** die Logikeinheit (5) derart konfiguriert ist, dass sie, wenn sie feststellt, dass der Hauptstromversorgungskreis (6) mit dem Versorgungsnetz (7) verbunden ist, es erlaubt, nach der Aktivierung des Demonstrationsmodus selektiv den realen Modus zu aktivieren.

9. Haushaltsgerät (1) nach einem oder mehreren der vorhergehenden Ansprüche, **dadurch gekennzeichnet, dass** die Logikeinheit (5) derart konfiguriert ist, dass sie die Aktivierung des realen Modus verhindert, wenn sie feststellt, dass der Hauptstromversorgungskreis (6) nicht mit dem Versorgungsnetz (7) verbunden ist und der sekundäre Stromversorgungskreis (8) mit der Batterie (9) verbunden ist.

10. Haushaltsgerät (1) nach einem oder mehreren der vorhergehenden Ansprüche, **dadurch gekennzeichnet, dass** es einen Schalter (10) umfasst, der durch die Logikeinheit (5) gesteuert wird und geeignet ist, die Batterie (9) selektiv mit dem sekundären Stromversorgungskreis 2 zu verbinden oder von ihm zu trennen.

11. Haushaltsgerät (1) nach einem oder mehreren der vorhergehenden Ansprüche, **dadurch gekennzeichnet, dass** die Batterie (9) abnehmbar mit dem Haushaltsgerät (1) verbunden werden kann.

12. Haushaltsgerät (1) nach einem oder mehreren der vorhergehenden Ansprüche, **dadurch gekennzeichnet, dass** die Batterie (9) mit dem sekundären Stromversorgungskreis (8) verbunden werden kann, indem sie in eine geeignete Aufnahme eingefügt wird, die im Außengehäuse (1a) des Haushaltsgeräts (1) gebildet ist.

13. Haushaltsgerät (1) nach einem oder mehreren der vorhergehenden Ansprüche, **dadurch gekennzeichnet, dass** die Batterie (9) vom wiederaufladbaren Typ ist und dass das Haushaltsgerät (1) eine Batterieladeeinrichtung (11) umfasst, die geeignet ist, die Batterie (9) aufzuladen, wenn der Hauptstromversorgungskreis (6) mit dem Versorgungsnetz (7) verbunden ist, wobei die Logikeinheit (5) geeignet ist, den Ladezustand der Batterie (9) zu erkennen und auch die Batterieladeeinrichtung (11) zu aktivieren, um die Batterie (9) aufzuladen, wenn sich die Ladung unter einem bestimmten Niveau befindet.

## Revendications

1. Appareil électroménager (1) comprenant :
- une interface utilisateur (2),
- une unité logique (5) adaptée pour commander ladite interface utilisateur (2) et les autres composants électriques de l'appareil électroménager, et pour exécuter, par l'intermédiaire de ladite interface utilisateur (2), un mode de démonstration,
- un circuit d'alimentation électrique principal (6) connectable au réseau d'alimentation électrique (7) et adapté pour alimenter en énergie ladite interface utilisateur (2), ladite unité logique (5) et lesdits autres composants électriques de l'appareil électroménager (1),
- un circuit d'alimentation électrique secondaire (8), connectable à une batterie (9) et adapté pour alimenter en énergie exclusivement ladite interface utilisateur (2) et ladite unité logique (5),
**caractérisé en ce que**
ladite unité logique (5) est configurée pour détecter si ledit circuit principal d'alimentation (6) est connecté audit réseau d'alimentation électrique (7) et si ledit circuit d'alimentation secondaire (8) est connecté à ladite batterie (9), et pour permettre l'exécution dudit mode de démonstration par l'intermédiaire de ladite interface utilisateur (2), quand elle détecte que ledit circuit d'alimentation électrique principal (6) n'est pas connecté audit réseau d'alimentation électrique (7) et que ledit circuit d'alimentation électrique secondaire (8) est connecté à ladite batterie (9).

2. Appareil électroménager (1) selon la revendication 1, **caractérisé en ce que** ladite unité logique (5) est configurée pour déconnecter ladite batterie (9) dudit circuit d'alimentation électrique secondaire (8) quand elle détecte que ledit circuit d'alimentation électrique principal (6) est connecté à ladite batterie (9).

3. Appareil électroménager (1), selon la revendication 1 ou 2, **caractérisé en ce que** l'unité logique (5) est configurée pour permettre l'exécution dudit mode de démonstration ou d'un mode réel quand il détecte que ledit circuit d'alimentation principal (6) est connecté audit réseau d'alimentation électrique (7) .

4. Appareil électroménager (1), selon la revendication 1 ou 2, **caractérisé en ce que** ladite unité logique (5) est configurée de telle sorte que lorsqu'elle détecte que ledit circuit d'alimentation principal (6) est connecté audit réseau d'alimentation électrique (7), elle permette d'exécuter automatiquement un mode réel.

5. Appareil électroménager (1) selon l'une au moins des revendications précédentes, **caractérisé en ce que** ladite unité logique (5) est configurée de façon à faire démarrer automatiquement ledit mode de démonstration lorsqu'elle détecte que ledit circuit principal d'alimentation (6) n'est pas connecté audit réseau d'alimentation électrique (7) et que ledit circuit d'alimentation électrique secondaire (8) est connecté à ladite batterie (9).

6. Appareil électroménager (1) selon l'une au moins des revendications précédentes, **caractérisé en ce que** ladite unité logique (5) est configurée de façon à ce que, après avoir permis l'exécution dudit mode de démonstration, le démarrage de ce dernier nécessite une action supplémentaire sur ladite interface utilisateur (2) ou sur un dispositif d'entrée supplémentaire adapté pour activer ledit mode de démonstration.

7. Appareil électroménager (1) selon l'une au moins des revendications précédentes, **caractérisé en ce que** ladite unité logique (5) est configurée de façon à ce que, si elle détecte que le circuit d'alimentation électrique principal (6) est connecté audit réseau d'alimentation électrique (7), elle permette d'activer sélectivement le mode de démonstration après activation du mode réel.

8. Appareil électroménager (1) selon l'une au moins des revendications précédentes, **caractérisé en ce que** ladite unité logique (5) est configurée de façon à ce que si elle détecte que ledit circuit d'alimentation principal (6) est connecté audit réseau d'alimentation électrique (7), elle permette d'activer sélectivement le mode réel après l'activation du mode démonstration.

9. Appareil électroménager (1) selon l'une au moins des revendications précédentes, **caractérisé en ce que** ladite unité logique (5) est configurée de façon à ce que si elle détecte que le circuit d'alimentation principal (6) n'est pas connecté audit réseau d'alimentation électrique (7), et que ledit circuit d'alimentation électrique secondaire (8) est connecté à ladite batterie (9), elle empêche l'activation du mode réel.

10. Appareil électroménager (1) selon l'une au moins des revendications précédentes, **caractérisé en ce qu'**il comprend un interrupteur (10) commandé par ladite unité logique (5), adapté pour connecter ou déconnecter sélectivement ladite batterie (9) dudit circuit d'alimentation électrique secondaire (8).

11. Appareil électroménager (1) selon l'une au moins des revendications précédentes, **caractérisé en ce que** ladite batterie (9) est amoviblement connectable audit appareil électroménager (1).

12. Appareil électroménager (1) selon l'une au moins des revendications précédentes, **caractérisé en ce que** ladite batterie (9) est connectable audit circuit d'alimentation électrique secondaire (8) en l'insérant dans un logement approprié obtenu dans le boîtier extérieur (1a) dudit appareil électroménager (1).

13. Appareil électroménager (1) selon l'une au moins des revendications précédentes, **caractérisé en ce que** ladite batterie (9) est de type rechargeable et **en ce que** ledit appareil électroménager (1) comprend un chargeur de batterie (11) adapté, lorsque le circuit d'alimentation électrique principal (6) est connecté audit réseau d'alimentation électrique (7), pour recharger ladite batterie (9), ladite unité logique (5) étant adaptée pour détecter le niveau de charge de ladite batterie (9), et également pour actionner ledit chargeur de batterie (11) afin de recharger ladite batterie (9), si le niveau de charge est inférieur à un niveau fixe.
